# EUROPÄISCHE PATENTSCHRIFT

(11) **EP 4 035 642 B1**
(45) Veröffentlichungstag und Bekanntmachung des Hinweises auf die Patenterteilung: **12.02.2025**
(21) Anmeldenummer: 22153816.8
(22) Anmeldetag: 28.01.2022
(51) Int. Cl.: A61H 3/04, B60B 33/02

(54) **ROLLATOR MIT SCHWENKROLLEN**
ROLLING WALKER WITH PIVOTING ROLLERS
DÉAMBULATEUR À ROULETTES PIVOTANTES

(30) Priorität: 28.01.2021 DE 102021101944
(43) Veröffentlichungstag der Anmeldung: 03.08.2022
(73) Patentinhaber: Dietz GmbH, 76307 Karlsbad-Ittersbach (DE)
(72) Erfinder: SOHLMANN, Gunnar, 22761 Hamburg (DE)
(74) Vertreter: Onsagers AS

(56) Entgegenhaltungen:
- WO-A1-2018/014139
- WO-A2-2006/118756
- DE-A1- 102018 124 575
- JP-A- 2015 202 385
- US-A1- 2012 043 730

## Beschreibung

### Technisches Gebiet

Die vorliegende Anmeldung betrifft ein Fahrgestell, zum Abstützen für eine gehende oder stehende Person, einen sogenannten Rollator, oder zum Schieben durch eine gehende oder stehende Person, zum Beispiel einen Rollstuhl, mit einem Gestell mit zwei Handgriffen in bestimmungsgemäßer Position des Fahrgestells in Geradeausfahrtrichtung gesehen links und rechts am Gestell und mit mindestens drei Rollen, die am Gestell jeweils so befestigt sind, dass sie in so bestimmungsgemäßer Orientierung des Fahrgestells alle auf einem ebenen Boden rollen, und von denen mindestens eine als Schwenkrolle ausgebildet ist und mindestens eine Rolle, wenn nicht schwenkbar, die Geradeausfahrtrichtung des Fahrgestells definiert.

### Hintergrund

Fahrgestelle, zum Abstützen für eine gehende oder stehende Person, sogenannte Rollatoren, haben sich weit verbreitet bewährt. An einem Gestell mit zwei Handgriffen in bestimmungsgemäßer Position des Fahrgestells in Geradeausfahrtrichtung gesehen links und rechts am Gestell kann sich eine aufrechte - bedürftige - Person aufstützen. Während des Gehens dienen mindestens drei Rollen, die am Gestell jeweils so befestigt sind, dass sie in bestimmungsgemäßer Orientierung des Fahrgestells alle auf einem ebenen Boden rollen, dazu. Der Gehrichtung der Person zu folgen. Um dabei auch Kurvenwege zu ermöglichen, sind von den mindestens drei Rollen mindestens eine als Schwenkrolle ausgebildet und mindestens eine Rolle nicht schwenkbar die Geradeausfahrtrichtung des Fahrgestells definiert. Um im Stillstand der Person sicheren Stand zu unterstützen, haben Rollatoren zumeist einen Bremsmechanismus mit einem Bremshebel, der nach Art einer Fahrradbremse nahe dem Griff angebracht und dort von der Hand der Person erreichbar und betätigbar ist. Entsprechendes gilt für Fahrgestelle zum Schieben durch eine gehende oder stehende Person, zum Beispiel für Rollstühle.

Für manche Wegsituationen allerdings haben sich herkömmliche Fahrgestelle oder Rollatoren als nicht zufriedenstellend manövrierfähig erwiesen.

Das Dokument WO2006118756 A2 offenbart eine Gehhilfe für Benutzer mit Haltungsdefiziten und/oder unzureichender Beinkraft, um unabhängig zu stehen oder zu gehen. Diese Vorrichtung umfasst hintere Rollen, die an jedem der hinteren Beine befestigt sind und in einer vorwärts und rückwärts gerichteten, nicht lenkbaren Position durch ein schwenkbares Verriegelungselement, das in einen Schlitz der verlängerten Befestigungswelle der Rolle greift, verriegelbar sind. Ein Freigabehebel und ein Verbindungskabel erleichtern das Verriegeln und Entriegeln der Rollen.

### Gegenstand der Erfindung

Es ist deshalb Aufgabe der vorliegenden Erfindung, einen Rollator einfacher Konstruktion mit verbesserter Manövrierfähigkeit zu schaffen.

Diese Aufgabe wird durch einen Rollator gemäß Anspruch 1 gelöst.

Bevorzugte Ausgestaltungen der Erfindung sind in den abhängigen Ansprüchen angegeben.

Ein erfindungsgemäßer Rollator dient zum Abstützen für (und/oder zum Schieben durch) eine gehende oder stehende Person. Er hat ein Gestell mit zwei Handgriffen, und zwar in bestimmungsgemäßer Position des Fahrgestells in Geradeausfahrtrichtung gesehen links und rechts am Gestell, die besonders bevorzugt im Wesentlichen horizontal sind und gegen die Geradeausfahrtrichtung nach hinten ragen. Und das Fahrgestell hat am Gestell vier Rollen.

Erfindungsgemäß nun sind alle Rollen als Schwenkrollen ausgebildet (oder ausbildbar: also "als Schwenkrollen ausgebildet" im Sinne von: ausgebildet, Schwenkrollen sein zu können), mindestens zwei der Rollen mittels eines lösbaren Arretiermechanismus arretierbar, und zwar in einer Winkelposition, die die Geradeausfahrtrichtung des Fahrgestells definiert. Möglicherweise oder erfindungsgemäß alternativ sind alle nicht schwenkbaren Rollen, mit einem Dearretier-/Arretiermechanismus, versehen, mittels dessen sie zwischen Schwenkbarkeit und nicht-Schwenkbarkeit einstellbar sind.

Indem erfindungsgemäß alle Rollen als Schwenkrollen ausgebildet sind (oder sich ausbilden lassen - also um eine in der bestimmungsgemäßen Position senkrechte Achse insbesondere um mehr als 360° schwenkbar sind), ist dieser erfindungsgemäße Rollator besonders manövrierfähig. Er lässt sich nicht nur durch üblicherweise nur die in Fahrtrichtung vorderen Schwenkrollen um Kurven lenken, sondern auch in jede beliebige Richtung seitlich auch parallel verschieben.

Besonders bevorzugt ist es wie bereits angedeutet, dass mindestens zwei der Rollen mittels eines lösbaren Arretiermechanismus in einer Winkelposition arretierbar ist, die die Geradeausfahrtrichtung des Fahrgestells definiert. Da mehrere Rollen arretierbar sind ( die beiden hinteren), weisen sie in der arretierten Position allesamt parallele Achsen auf. Dies ermöglicht es, den besonders manövrierfähigen, aber für schnelle Geradeausfahrt nicht ganz so richtungsstabilen erfindungsgemäßen Rollator zum Beispiel in eine herkömmliche Konstellation mit geradeaus gerichteten Hinterrädern durch deren Arretierung zu verwandeln. Vorzugsweise arretiert der Arretiermechanismus dann jede der arretierbaren Rollen mittels einer Vorspannungseinrichtung selbsttätig, sobald die Rolle in die Winkelposition geschwenkt ist. So kann diese Schwenkrolle selbsttätig wieder ihre starre Richtung (insbesondere in der Geradeausrichtung des Rollators) einnehmen, sobald eine Dearretiereinrichtung des Arretiermechanismus vom Benutzer nicht mehr betätigt gehalten ist.

Auch alle Rollen des Fahrgestells können solche Schwenkrollen, schwenkbar und zudem in ihrer Schwenkbarkeit arretierbar und dearretierbar sein. Auch ist es eine mögliche Ausgestaltung der Erfindung, dass alle Rollen schwenkbar sind - und sich (durch Betätigung eines Arretiermechnismus) in derjenigen Winkelposition arretieren lassen, in der das Fahrgestell gerade geschoben wird (also nur zufällig der Geradeausfahrtrichtung des Fahrgestells). Dazu dann ist der Arretiermechnismus der Schwenkbewegung vorzugsweise nicht formschlüssig, sondern vorzugsweise reibschlüssig.

Vorzugsweise aber ist jede der arretierbaren Rollen mittels eines Zugriegels arretiert, der mittels Bowdenzug lösbar ist. Besonders bevorzugt sind alle arretierbaren Rollen zugleich mittels eines Hebels lösbar. Die Erfindung sieht vor, dass die Handgriffe des Rollators auch den Hebel dafür bilden: in bestimmungsgemäßer Position des Fahrgestells im Wesentlichen horizontal und gegen die Geradeausfahrtrichtung (insbesondere waagerecht) nach hinten ragend, sind sie zum Dearretieren der Schwenkrolle (so dass diese sich aus ihrer arretiert starren Richtung in eine Schwenkrolle "verwandelt") nach oben (und zum wieder Arretieren der Schwenkrolle auch wieder nach unten) schwenkbar.

Vorzugsweise erstreckt sich am Gestell oder an einem Fahrgestell gemäß dem Oberbegriff des Hauptanspruchs ein zusätzlicher Griffholm quer zu der Geradeausfahrtrichtung. Dies ermöglicht eine zweite Greifposition der Hände der benutzenden Person, insbesondere rechtwinklig zu der ersten an den Griffen - nämlich eine gewohnte: etwa wie an einem Griffholm eines Einkaufswagens. Dies ist also, ähnlich wie das Variieren der Griffpositionen eines Rennradfahrers an seinem Lenkbügel eine erfindungsgemäß ergonomisch variantenreichere Möglichkeit des Abstützens auf dem Rollator, und dabei einschließlich einer für jedermann gewohnten Orientierung.

Vorzugsweise ist der Griffholm auch die Schwenkachse der Handgriffe, wenn diese als Betätigungshebel zum Betätigen insbesondere eines Dearretiermechanismus (insbesondere aus starrer Geradeausposition dearretierbarer Schwenkrollen) ausgebildet sind. Dann kann zu dem Betätigen auch der Griffholm selbst um seine Längsachse gedreht werden und somit selbst als Betätiger ausgebildet sein.

Vorzugsweise ist der Bowdenzug einer Bowdenzug-betätigten Vorrichtung (des Fahrgestells oder eines Fahrgestells gemäß dem Oberbegriff des Hauptanspruchs - nämlich insbesondere einer Bremse, Arretierung oder Dearretierung) mittels eines Betätigungshebels betätigbar, der nach Art einer Wippe einen Hebelausleger auf beiden Seiten eines Hebellagers aufweist. Der Betätigungshebel betätigt durch Schwenken (oder Drehen) jedes der beiden Hebelausleger gegen die Zugrichtung des Bowdenzugs und in einander entgegengesetzte (aufeinander zu gerichtete] Drehrichtungen den Bowdenzug (indem er den Innenzug des Bowdenzugs zieht). Dazu weist der Hebel beidseitig von der Befestigung des Bowdenzugs am Hebel je ein Hebellager auf, und bei unbetätigtem Hebel liegen beide Hebellager in Zugrichtung des Bowdenzugs (und also gegen die Schwenkrichtung) jeweils an einer am Gestell gehalterten ersten Lagerfläche an. Außerdem sind die Hebellager dort vorzugsweise quer zur Zugrichtung des Bowdenzugs und weg von der Befestigung der Bowdenzughülle am Gestell formschlüssig gelagert. Diese erfindungsgemäße Anordnung ermöglicht es anders, als es von herkömmlichen Bowdenzug-Betätigungshebeln (zum Beispiel für Fahrradbremsen) bekannt ist, ein und denselben Bowdenzug von mehr als einem Griff aus mittels Hebel zu betätigen, zum Beispiel auch und selbst, wenn die Griffe zu verschiedenen Seiten der Befestigung der Bowdenzughülle liegen. Dies ist besonders vorteilhaft, wenn der Rollator einen zusätzlichen Griffholm quer zu der Geradeausfahrtrichtung aufweist. Dann kann sich ein Hebelausleger entlang des Griffholms und ein Hebelausleger entlang entlang eines der Griffe erstrecken.

Vorzugsweise sind dann zweite Lagerflächen zwischen den ersten Lagerflächen angeordnet, und zwar näher an der Befestigung der Bowdenzughülle als die ersten Lagerflächen und beidseitig von der Befestigung der Bowdenzughülle und bezüglich den ersten Lagerflächen in Zugrichtung des Bowdenzugs. Dazwischen gibt es eine Gleitbahn, auf der, beim Betätigen eines der Hebelausleger, sich das dem jeweiligen Hebel gegenüberliegende, somit belastete Hebellager aus der ersten in die zweite Lagerfläche gleitend verschieben lässt.

Vorzugsweise sind dann dritte Lagerflächen außerhalb von den ersten Lagerflächen angeordnet, und zwar entfernter von der Befestigung des Bowdenzugs als die ersten Lagerflächen und beidseitig von der Befestigung des Bowdenzugs und bezüglich den ersten Lagerflächen gegen Zugrichtung des Bowdenzugs. Auf den dritten Lagerflächen ist das jeweils andere Hebellager, durch das Betätigen von seiner ersten Lagerfläche abgehoben (und indem das eine Hebellager dabei aus der ersten in die zweite Lagerfläche gleitet) formschlüssig, die Betätigung arretierend, ablegbar.

Vorzugsweise sind die Lagerflächen komplementär zum jeweils anliegenden Hebellager geformt.

Vorzugsweise lässt sich ein Tablett auf Schienen am Gestell oder an einem Fahrgestell gemäß dem Oberbegriff des Hauptanspruchs in der bestimmungsgemäßen Orientierung des Fahrgestells horizontal einsetzen - mit anderen Worten so, dass die Tablettfläche zum Abstellen von Gegenstanden darauf waagerecht orientiert ist. So lässt sich der Rollator auch als Transport-, Servier- oder Teewagen benutzen. Besonders bevorzugt ist das Tablett auf den Schienen in verschiedene Positionen auf dem Rollator verschieblich oder in verschiedenen Positionen auf dem Rollator positionierbar. So kann das Tablett nahe an der Person positioniert sein und ihr, je nach Höhe der Position, als Tisch oder Stehtisch oder Arbeitsplatte dienen. Besonders bevorzugt ist dabei die Anordnung der Schienen so, dass das Tablett sich zwischen die Griffe und/oder auf Höhe der Griffe und dabei besonders bevorzugt in mindestens zwei Höhen, erstens in ungefährer Höhe einer Küchenarbeitsplatte und zweitens ungefähr in Esstischhöhe einsetzen lässt, und zwar wiederum besonders bevorzugt in einer in Fahrtrichtung vorderen und einer hinteren Position gegen einen Anschlag (und dazwischen vorzugsweise stufenlos.

Insbesondere sind es zwei Schienen, die in Fahrtrichtung des Rollators links und rechts zueinander parallel am Rollator angeordnet sind, und/oder das Tablett hat insbesondere an seiner Unterseite zu den Schienen formschlüssig komplementär geformte Konturen.

Vorzugsweise ist das Gestell oder ein Fahrgestell gemäß dem Oberbegriff des Hauptanspruchs um mindestens eine in der bestimmungsgemäßen Orientierung des Fahrgestells aufrechte (insbesondere senkrechte) Schwenkachsen-Vorrichtung zwischen einer Fahr- und einer Stauposition schwenkbar. Dies ermöglicht gegenüber herkömmlichen Zusammenfaltgeometrien von Rollatoren das Zusammenfalten auch bei weiterhin von oben belasteten Griffen.

Vorzugsweise weist das Gestell ein (insbesondere im Wesentlichen ebenes oder leicht gewölbtes) Quergerüst auf, das sich in der bestimmungsgemäßen Orientierung des Fahrgestells über dessen Breite erstreckt zwischen jeweils einer aufrechten (insbesondere senkrechten) Schwenkachsen-Vorrichtung links und rechts, um die ein linkes und ein rechtes (insbesondere ebenes) Rollengerüst (jeweils mit zwei Rollen an seinen unteren Enden) zwischen einer Fahrposition (insbesondere in der Geradeausfahrtrichtung orientiert) und einer Stauposition (quer dazu, auf das Quergerüst gefaltet) schwenkbar ist. So ergibt sich vorteilhaft ein Gestell in der bestimmungsgemäßen Orientierung von oben U-förmig nach hinten gegen die Fahrtrichtung offen, so dass die Person darin wie in einem römischen Streitwagen stehend vom Gestell und von insbesondere vier Rollen des Rollators umgeben ist.

Vorzugsweise weist das Gestell oder ein Fahrgestell gemäß dem Oberbegriff des Hauptanspruchs zwei in der bestimmungsgemäßen Orientierung des Fahrgestells in Fahrtrichtung parallel zueinander und in Höhe einer Sesselarmlehne angeordnete, im Wesentlichen waagerechte Holmgriffe auf, und zwar links und rechts von einem Personenbereich, der von dem Gestell nur in Fahrtrichtung vorne und seitlich umgeben, aber selbst freigelassen ist. Darauf kann sich die Person aufstützen, insbesondere um sich zu erheben, zum Beispiel von einem Stuhl, und wird dabei sicher vom erfindungsgemäßen Rollator unterstützt, der sich auf seinen Rollen so hinrollen ließ, dass das Gestell zum Beispiel den Stuhl in dem Personenbereich umgibt.

Die Oberseite der Holmgriffe kann als Schiene ausgebildet sein, um dort ein Tablett einzusetzen.

### Kurze Beschreibung der Figuren

- Fig. 1: zeigt eine räumliche Ansicht eines erfindungsgemä-βen Fahrgestells,

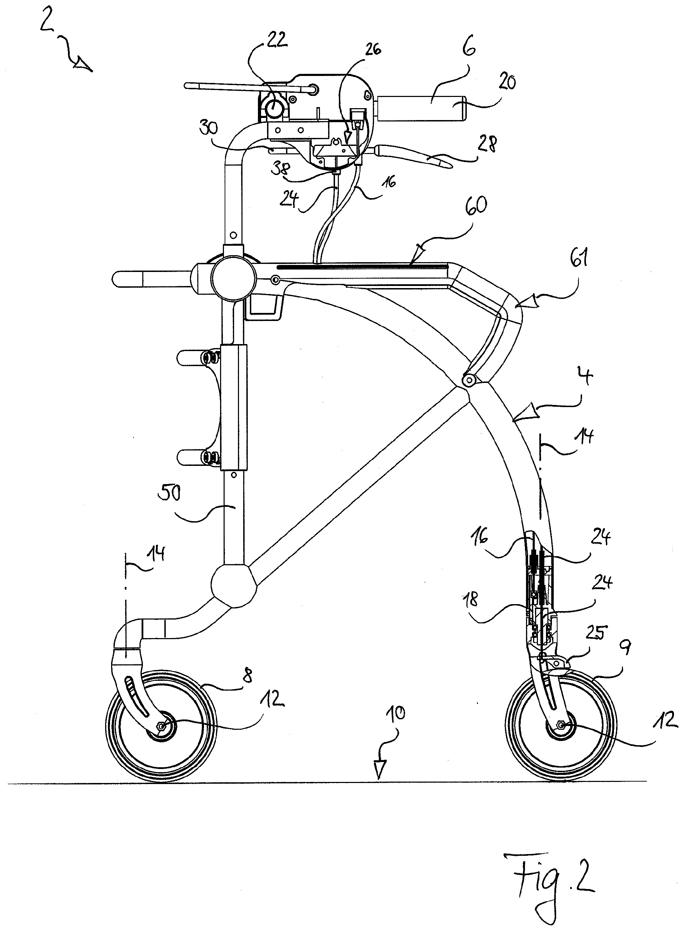

- Fig. 2: zeigt eine teilweise geschnittene Seitenansicht des erfindungsgemäßen Fahrgestells aus Fig. 1 unbetätigt,

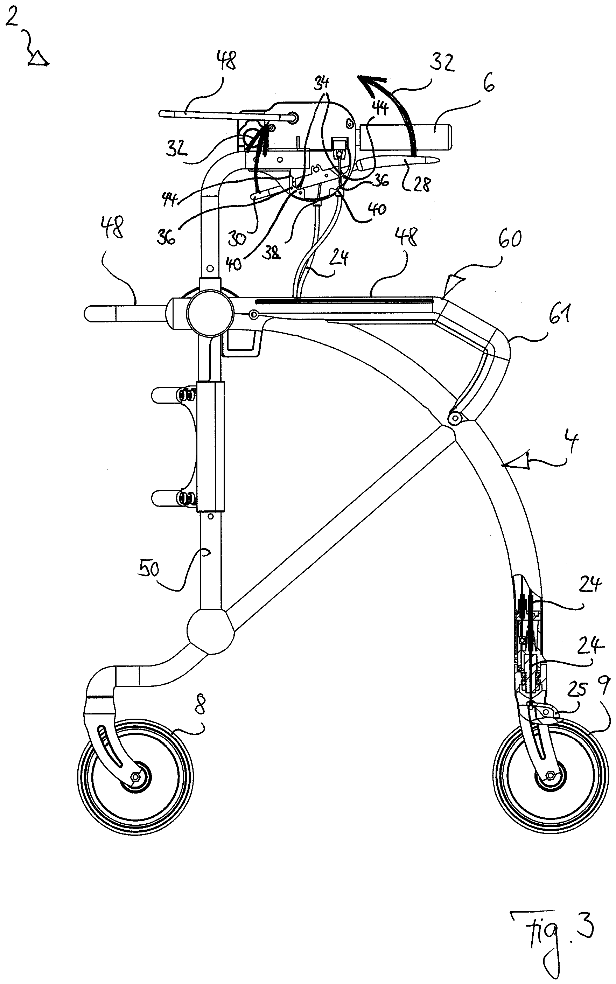

- Fig. 3: zeigt eine teilweise geschnittene Seitenansicht des erfindungsgemäßen Fahrgestells aus Fig. 1 mit einerseits betätigter Bremshebelwippe,

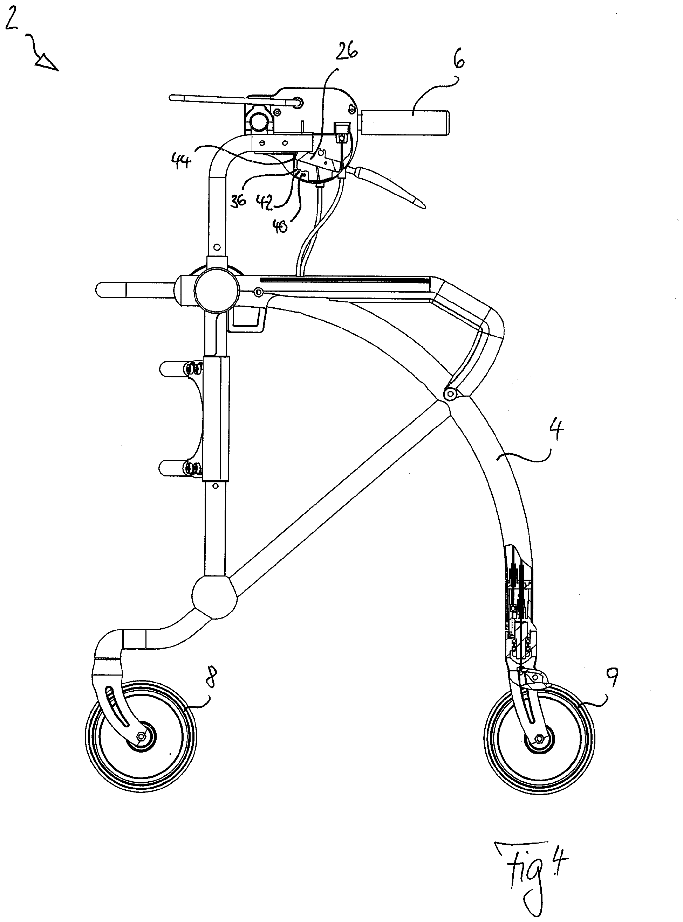

- Fig. 4: zeigt eine teilweise geschnittene Seitenansicht des erfindungsgemäßen Fahrgestells aus Fig. 1 mit andererseits betätigter Bremshebelwippe,
- Fig. 5: zeigt eine teilweise geschnittene Seitenansicht des erfindungsgemäßen Fahrgestells aus Fig. 1 mit betätigtem Griff zur Dearretierung der hinteren Schwenkrollen,
- Fig. 6: zeigt eine teilweise geschnittene räumliche Ansicht einer arretierbaren Schwenkrolle des erfindungsgemäßen Fahrgestells aus Fig. 1,

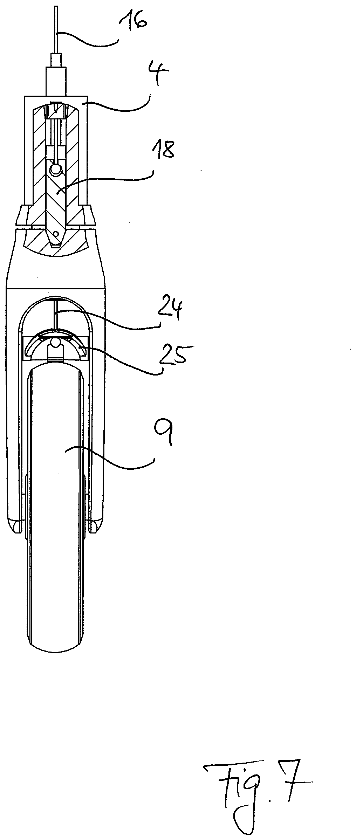

- Fig. 7: zeigt eine teilweise geschnittene Vorderansicht einer arretierbaren Schwenkrolle des erfindungsgemä-βen Fahrgestells aus Fig. 1,
- Fig. 8: zeigt eine räumliche Ansicht des erfindungsgemäßen Fahrgestells aus Fig. 1 mit einem Tablett waagerecht auf Schienen am Rollator eingesetzt in einer ersten Position,
- Fig. 9: zeigt eine räumliche Ansicht des erfindungsgemäßen Fahrgestells aus Fig. 1 mit einem Tablett waagerecht auf Schienen am Rollator eingesetzt in einer zweiten Position,
- Fig. 10: zeigt eine räumliche Ansicht des erfindungsgemäßen Fahrgestells aus Fig. 1 mit einem Tablett waagerecht auf Schienen am Rollator eingesetzt in einer dritten Position und
- Fig. 11: zeigt eine räumliche Ansicht des erfindungsgemäßen Fahrgestells aus Fig. 1 teilweise zusammengefaltet.

### Detaillierte Beschreibung der bevorzugten Ausführungsformen

Nachfolgend wird anhand der beigefügten Figuren eine bevorzugte Ausführungsform der vorliegenden Erfindung im Detail beschrieben.

Die Figuren zeigen ein Fahrgestell 2 zum Abstützen für eine gehende oder stehende Person (nicht dargestellt). Es ist ein sogenannter Rollator 2. Er hat ein Gestell 4 mit zwei Handgriffen 6, und zwar in der abgebildeten bestimmungsgemäßen Position des Fahrgestells 2 (mit seinen vier Rollen 8, 9 auf einem ebenen Boden 10) in Geradeausfahrtrichtung gesehen links und rechts am Gestell 4, die horizontal sind und gegen die Geradeausfahrtrichtung nach hinten ragen. Und der Rollator 2 hat am Gestell 4, wie gesagt, vier Rollen 8, 9. Zwei Rollen 8 sind dauerhaft als Schwenkrolle ausgebildet, und zwei Rollen 9 definieren, nicht schwenkbar arretiert, die Geradeausfahrtrichtung des Fahrgestells 2. Die zwei Rollen 9 weisen, arretiert, so dass sie nicht schwenkbar sind, parallele Achsen 12 auf.

Es sind allerdings alle Rollen, auch die schwenkarretierten Rollen 9 als Schwenkrollen ausgebildet, und die schwenkarretierten Rollen sind mittels eines lösbaren Arretiermechanismus arretierbar und arretiert, und zwar in genau einer Winkelposition (der abgebildeten), die die Geradeausfahrtrichtung des Fahrgestells 2 definiert.

Indem alle Rollen 8 und 9 als Schwenkrollen ausgebildet sind (also um eine in der abgebildeten bestimmungsgemäßen Position senkrechte Achse 14 um 360° und mehr schwenkbar sind, ist dieser Rollator 2 besonders manövrierfähig. Er lässt sich nicht nur durch die wie üblich in Fahrtrichtung vorderen Schwenkrollen 8 um Kurven lenken, sondern - mit in ihrer Schwenkbarkeit dearretierten hinteren Rollen 9 auch in jede beliebige Richtung seitlich verschieben. Parallel zur Ebene des Bodens 10 erlaubt dies jegliche Verschiebung und Verdrehung des Rollators 2.

Die zwei arretierbaren Rollen 9 sind mittels eines lösbaren Arretiermechanismus 16 in der einen Winkelposition arretierbar, die die Geradeausfahrtrichtung des Fahrgestells 2 definiert. Da zwei Rollen 9, die hinteren, arretierbar sind, weisen sie in der abgebildeten arretierten Position allesamt parallele Achsen 12 auf. Dies ermöglicht es, den besonders manövrierfähigen, aber für schnelle Geradausfahrt mit dearretierten hinteren Rollen 9 nicht ganz so richtungsstabilen Rollator in eine herkömmliche Konstellation mit geradeaus gerichteten Hinterrädern 9 durch deren Arretierung zu verwandeln.

Dazu arretiert der Arretiermechanismus 16 jede der arretierbaren Rollen 9 mittels einer Vorspannungseinrichtung, einer Feder (nicht dargestellt - oberhalb des Riegels 18), selbsttätig, sobald die Rolle 9 in die abgebildete Winkelposition geschwenkt ist. So kann diese Schwenkrolle 9 selbsttätig wieder ihre abgebildete starre Richtung (in der Geradeausrichtung des Rollators 2) einnehmen, sobald eine Dearretiereinrichtung 18 des Arretiermechanismus 16 vom Benutzer nicht mehr betätigt gehalten ist.

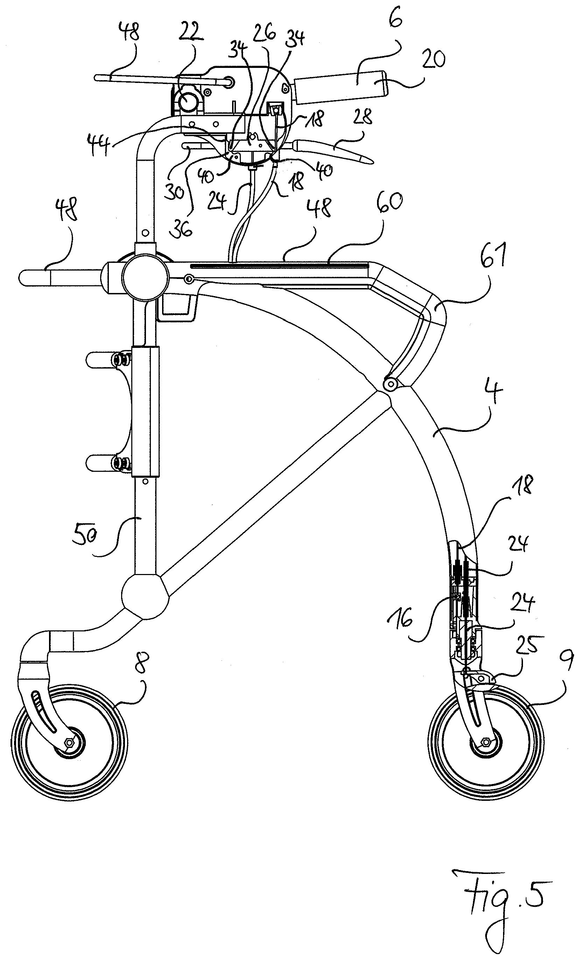

Und zwar ist jede der arretierbaren Rollen 9 mittels eines Zugriegels 18 arretiert, der mittels Bowdenzug 16 lösbar ist. Dabei sind beide arretierbaren Rollen 9 zugleich mittels eines Hebels 20 dearretierbar - wobei die Handgriffe 6 des Rollators den Hebel 20 bilden (Fig. 5): in der bestimmungsgemäßen Position des Fahrgestells 2 horizontal und gegen die Geradeausfahrtrichtung waagerecht nach hinten ragend sind sie zum Dearretieren der Schwenkrollen 9 (so dass die sich aus ihrer arretiert starren Richtung in eine Schwenkrolle "verwandeln") nach oben betätigbar und schwenken unter der Federvorspannung und Schwerkraft zum wieder Arretieren der Schwenkrollen 9 nach unten wieder nach unten, sobald die hinteren Rollen 9 die (abgebildete) Winkelposition der Geradeausfahrt einnehmen.

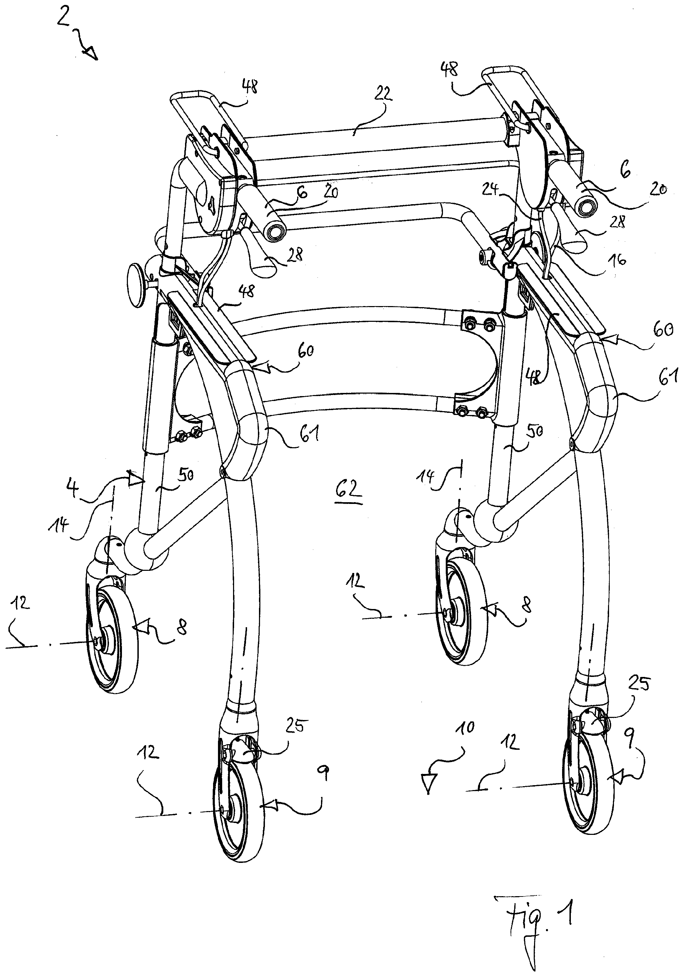

In Fig. 1, 0 und 11 gut erkennbar erstreckt sich ein zusätzlicher Griffholm 22 gerade und quer zu der Geradeausfahrtrichtung. Dies ermöglicht eine zweite Greifposition der Hände der benutzenden Person (nicht dargestellt), insbesondere rechtwinklig zu der ersten an den Griffen 6 - nämlich eine gewohnte: etwa wie an einem Griffholm eines Einkaufswagens. Dies ist also, ähnlich wie das Variieren der Griffpositionen eines Rennradfahrers an seinem Lenkbügel eine erfindungsgemäß ergonomisch variantenreichere Möglichkeit des Abstützens auf dem Rollator 2, und dabei einschließlich einer für jedermann gewohnten Orientierung - insbesondere aber erlaubt der Querholm auch die einhändige Nutzung.

Zugleich ist der Griffholm 22 auch die Schwenkachse der Handgriffe 6, da diese wie beschrieben als Betätigungshebel zum Betätigen des Dearretiermechanismus 16 ausgebildet sind. So kann zu dem Betätigen auch der Griffholm 22 selbst um seine Längsachse (nicht dargestellt) gedreht werden und ist somit selbst als Betätiger ausgebildet.

Des Weiteren sind die zwei Bowdenzüge 24 einer Bowdenzug-betätigten Bremse 26 des Rollators mittels eines Betätigungshebels 26 betätigbar, der nach Art einer Wippe je einen Hebelausleger 28, 30 auf beiden Seiten eines Hebellagers aufweist. Der Betätigungshebel 26 betätigt durch Schwenken 32 jedes der beiden Hebelausleger 28, 30 (gegen die Zugrichtung des Bowdenzugs 24 und in einander entgegengesetzte (und kreisbogenförmig aufeinander zu gerichtete] Drehrichtungen 32 den Bowdenzug 24 (indem er den Innenzug des Bowdenzugs 24 zieht). Dazu weist der Hebel 26 beidseitig von der Befestigung des Bowdenzugs 24 am Hebel 26 je ein Hebellager 34 auf, und bei unbetätigtem Hebel 26 liegen beide Hebellager 34 in Zugrichtung des Bowdenzugs 24 (in den Figuren nach unten und also gegen die Schwenkrichtung 32) jeweils an einer am Gestell 4 gehalterten ersten Lagerfläche 36 an. Außerdem sind die Hebellager 34 dort quer zur Zugrichtung des Bowdenzugs und weg von der Befestigung 38 der Bowdenzughülle am Gestell 4 formschlüssig gelagert. Diese Anordnung ermöglicht es anders, als es von herkömmlichen Bowdenzug-Betätigungshebeln (zum Beispiel für Fahrradbremsen) bekannt ist, ein und denselben Bowdenzug von mehr als einem Griff 6 aus mittels Hebel zu betätigen, zum Beispiel auch und selbst, wenn die Griffe 6, 22 zu verschiedenen Seiten der Befestigung 38 der Bowdenzughülle liegen. Dies ist besonders vorteilhaft, weil der Rollator 2 einen zusätzlichen Griffholm 22 quer zu der Geradeausfahrtrichtung aufweist. So kann sich ein Hebelausleger 30 entlang den Griffholm 22 und ein Hebelausleger 28 entlang je einen der Griffe 6 erstrecken.

Zweite Lagerflächen 40 sind zwischen den ersten Lagerflächen 36 angeordnet, und zwar näher an der Befestigung 38 der Bowdenzughülle als die ersten Lagerflächen 36 und beidseitig von der Befestigung 38 der Bowdenzughülle und bezüglich den ersten Lagerflächen 36 in Zugrichtung des Bowdenzugs (in den Figuren nach unten). Dazwischen gibt es eine Gleitkontur 42, auf der, beim Betätigen eines der Hebelausleger 28, 30, sich das dem jeweiligen Hebelausleger 28, 30 gegenüberliegende, somit belastete Hebellager 34 aus der ersten Lagerfläche 36 in die zweite Lagerfläche 40 gleitend verschieben lässt.

Dritte Lagerflächen 44 sind außerhalb von den ersten Lagerflächen 36 angeordnet, und zwar entfernter von der Befestigung 38 des Bowdenzugs als die ersten Lagerflächen 36 und beidseitig von der Befestigung 38 des Bowdenzugs und bezüglich den ersten Lagerflächen 36 gegen Zugrichtung des Bowdenzugs. Auf den dritten Lagerflächen 44 ist das jeweils andere der Hebellager 34, durch das Betätigen von seiner ersten Lagerfläche 36 abgehoben (und indem das gegenüberliegende Hebellager 34 dabei aus seiner ersten Lagerfläche 36 in seine zweite Lagerfläche 40 gleitet) formschlüssig, die Betätigung 26 insbesondere mit gezogenem Bowdenzug arretierend, ablegbar.

Die Lagerflächen 36, 40, 44 sind komplementär zum jeweils anliegenden Hebellager 34 geformt.

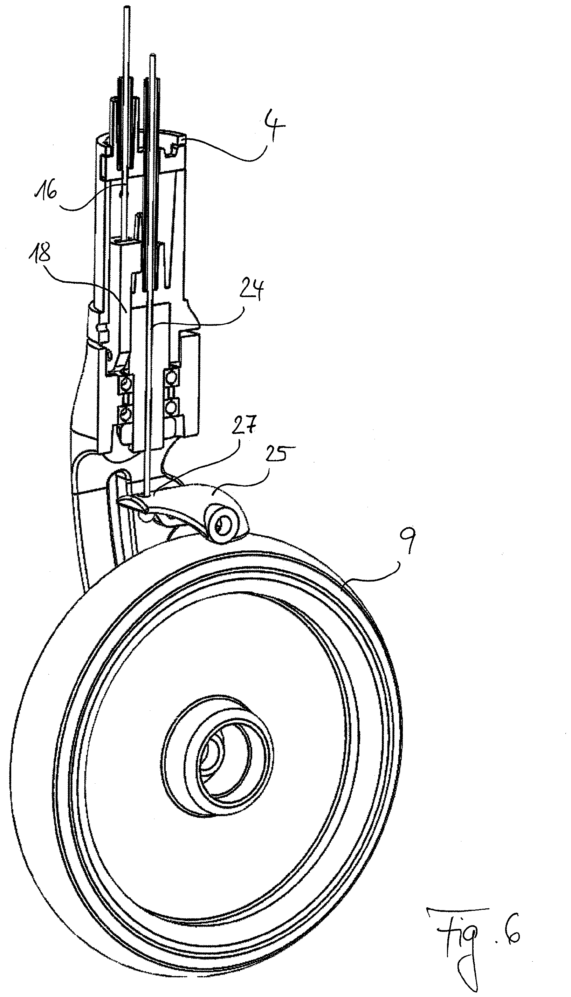

Das Ziehen des Betätigungshebels 26 bewirkt vorliegend, mit Blick auf Fig. 6 das Ziehen an einem Hebelausleger 27 eines Bremskipphebels, dessen dem Hebelausleger 27 gegenüberliegendes Ende 25 durch die Betätigung auf die (Lauffläche der) Rolle 9 gekippt wird und so ihre Bremsung verursacht. Der Innenzug des Bowdenzugs 24 verläuft dabei genau durch die (rohrförmig ausgebildete Drehachse dieser (durch den Riegel 18 arretierten) Schwenkrolle 9, so dass ihre Schwenkbarkeit um 360° und mehr nicht blockiert oder behindert wird.

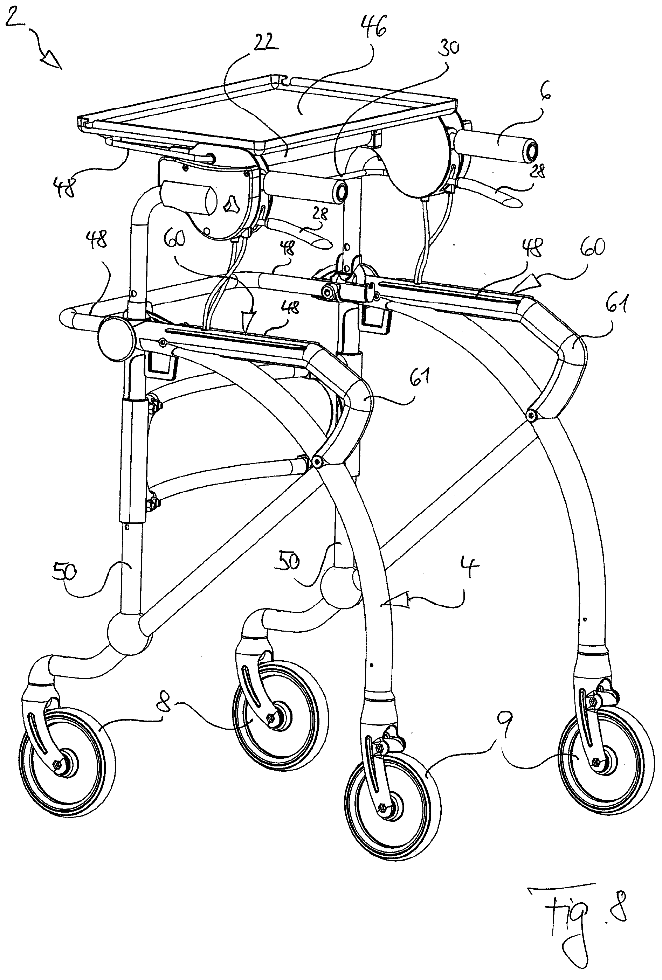

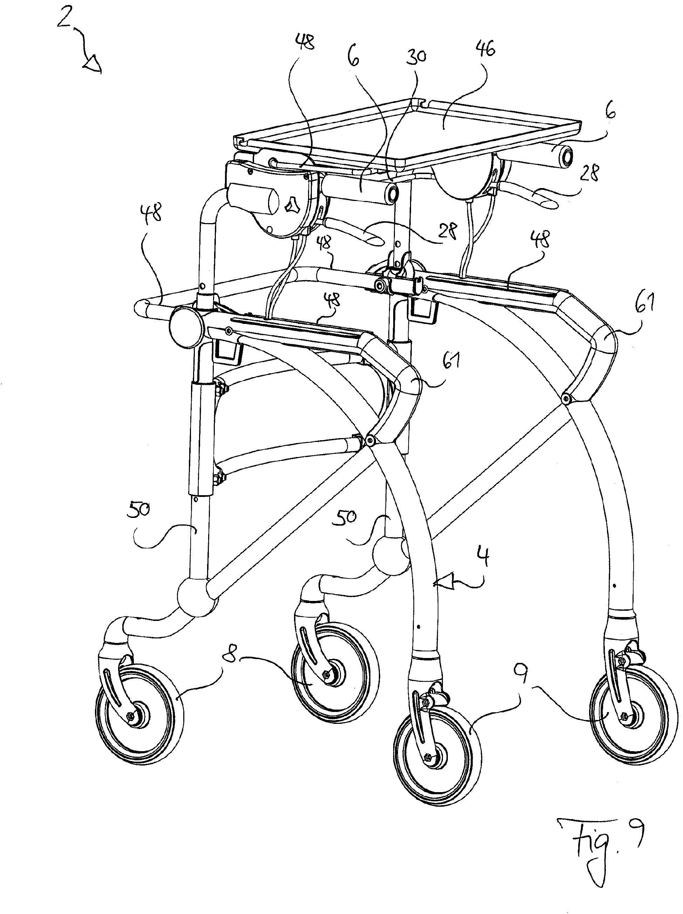

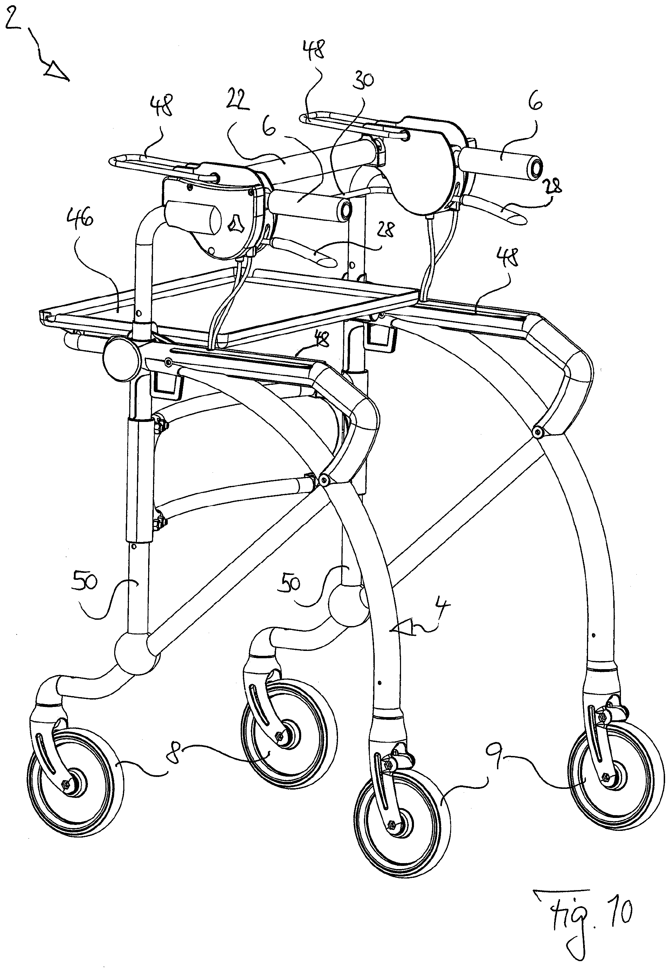

Wie in Figuren 8 bis 10 erkennbar, lässt sich ein Tablett 46 auf Schienen 48 am Gestell 4 in der bestimmungsgemäßen Orientierung des Fahrgestells 2 horizontal aufsetzen. So lässt sich der Rollator 2 auch als Transport-, Servier- oder Teewagen benutzen. Dabei ist das Tablett 46 auf den Schienen 48 in verschiedene Positionen auf dem Rollator 2 verschieblich und positionierbar. So kann das Tablett 46 nahe an der Person (nicht dargestellt) positioniert sein und ihr, je nach Höhe der Position, als Tisch oder Stehtisch oder Arbeitsplatte dienen. Besonders vorteilhaft ist dabei nämlich die Anordnung der Schienen 48 so, dass das Tablett 46 sich zwischen die Griffe 6 auf Höhe der Griffe 6 und dabei in zwei Höhen, erstens in ungefährer Höhe (etwa 80 bis 100 cm) einer Küchenarbeitsplatte und zweitens ungefähr in Esstischhöhe (etwa 60 bis 80 cm - ausgewählt sind 67 cm) einsetzen lässt, und zwar jeweils in einer in Fahrtrichtung vorderen und einer hinteren Position gegen einen Anschlag (nicht dargestellt) und dazwischen stufenlos (nur in der unteren Höhe). Dazu ist die Schiene 48 für die obere Höhe des Tabletts zwischen der vorderen und der hinteren Position um eine waagerechte Achse schwenkbar (Fig. 8 und 9)

Genauer sind es in beiden Höhen zwei Schienen 48, die in Fahrtrichtung des Rollators 2 links und rechts zueinander parallel am Rollator angeordnet sind, und das Tablett hat an seiner Unterseite (nicht dargestellt) zu den Schienen formschlüssig komplementär geformte Konturen.

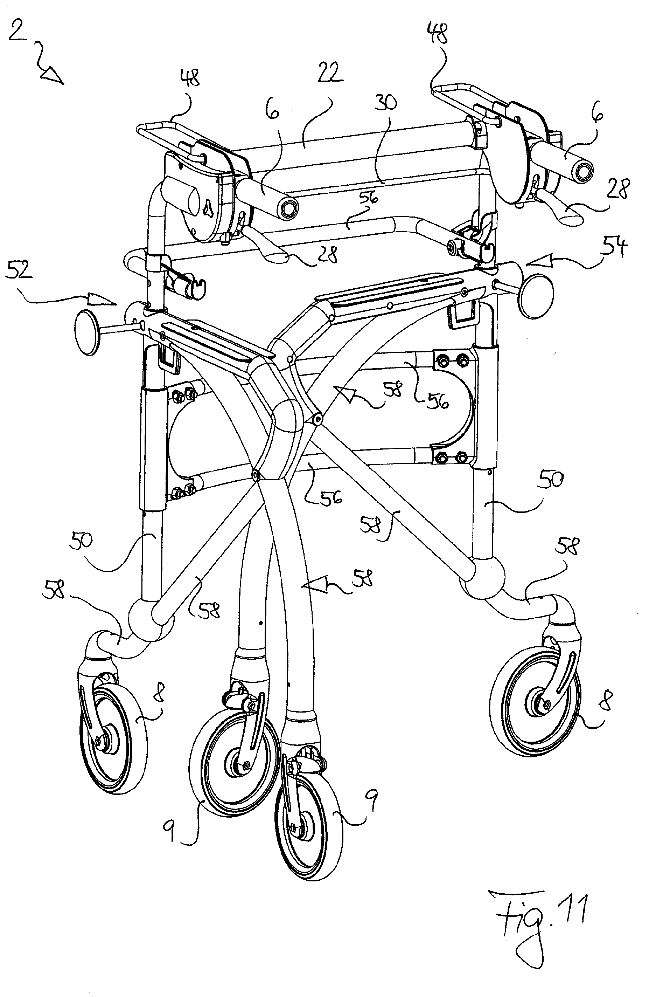

Auch ist das Gestell 4 um mindestens eine in der bestimmungsgemäßen Orientierung des Fahrgestells senkrechte Schwenkachsen-Vorrichtung 50 zwischen einer Fahrposition 52 und einer Stauposition 54 schwenkbar (Fig. 11). Dies ermöglicht gegenüber herkömmlichen Zusammenfaltgeometrien von Rollatoren das Zusammenfalten auch bei weiterhin von oben belasteten Griffen 6.

Insbesondere weist das Gestell 4 ein (von oben betrachtet leicht gewölbtes) Quergerüst 56 auf, das sich in der bestimmungsgemäßen Orientierung des Fahrgestells 2 über dessen Breite erstreckt zwischen jeweils der senkrechten Schwenkachsen-Vorrichtung 50 links und rechts, um die ein linkes und ein rechtes, ebenes Rollengerüst 58 (jeweils mit zwei Rollen (8 und 9) an seinen unteren Enden) zwischen einer Fahrposition 52 (in der Geradeausfahrtrichtung orientiert) und einer Stauposition 54 (quer dazu, auf das Quergerüst 56 gefaltet wobei Holme der Rollengerüste in den Wolbungen des Quergerüsts 56 zu liegen kommen) schwenkbar ist. So ergibt sich in der Fahrposition 52 vorteilhaft ein Gestell, das in der bestimmungsgemäßen Orientierung von oben U-förmig nach hinten gegen die Fahrtrichtung offen ist, so dass die Person (nicht dargestellt) darin wie in einem römischen Streitwagen stehend vom Gestell 4 und von insbesondere vier Rollen des Rollators umgeben ist.

Und schließlich weist das Gestell 4 zwei in der bestimmungsgemäßen Orientierung des Fahrgestells in Fahrtrichtung parallel zueinander und in Höhe einer Sesselarmlehne (etwa 60 bis 80 cm - ausgewählt sind 67 cm) angeordnete, im Wesentlichen waagerechte Holmgriffe 60 auf, und zwar links und rechts von einem Personenbereich 62, der von dem Gestell 4 nur in Fahrtrichtung vorne und seitlich umgeben und selbst freigelassen ist. Darauf kann sich die Person (nicht dargestellt) aufstützen, insbesondere um sich zu erheben, zum Beispiel von einem Stuhl (nicht dargestellt), und wird dabei sicher vom Rollator 2 unterstützt, der sich auf seinen Rollen so hinrollen ließ, dass das Gestell 4 zum Beispiel den Stuhl in dem Personenbereich umgibt - und die Person, vom Rollator 2 gestützt, aufstehen kann. Am hinteren Ende gehen beide horizontalen Holmgriffe in einen bogenförmig abwärts zurück zum Gestell 4 führenden Endgriff 61.

### Bezugszeichenliste

Fahrgestell, Rollator 2
Gestell 4
Handgriffe 6
Rollen 8
Schwenkarretierte Rollen 9
Boden 10
Achsen 12
Schwenkachse 14
Arretiermechanismus 16
Dearretiereinrichtung, Zugriegel 18
Hebel 20
Griffholm 22
Bowdenzug 24
Bremse 25
Betätigungshebel 26
Bremskipphebelausleger 27
Hebelausleger 28, 30
Schwenkrichtung 32
Hebellager 34
Erste Lagerfläche 36
Befestigung 38 der Bowdenzughülle
Zweite Lagerfläche 40
Gleitkontur 42
Dritte Lagerfläche 44
Tablett 46
Schiene 48
senkrechte Schwenkachsen-Vorrichtung 50
Fahrposition 52
Stauposition 54
Quergerüst 56
Rollengerüst 58
Holmgriffe 60
Endgriff 61
Personenbereich 62

## Patentansprüche

1. Rollator (2),
zum Abstützen einer gehenden oder stehenden Person durch zwei Handgriffe (6), mit einem Gestell (4),
mit einem Dearretiermechanismus (18) und einem Arretiermechanismus (16),
wobei die zwei Handgriffen (6) in bestimmungsgemäßer Position des Fahrgestells (2) in Geradeausfahrtrichtung gesehen links und rechts am Gestell angebracht sind,
mit vier Rollen (8, 9), die am Gestell jeweils so befestigt sind, dass sie in so bestimmungsgemäßer Orientierung des Fahrgestells (2) alle auf einem ebenen Boden (10) rollen, und von denen zwei als Schwenkrolle ausgebildet sind und zwei Rollen (9), nämlich die beiden hinteren, nicht schwenkbar, die Geradeausfahrtrichtung des Fahrgestells (2) definieren,
wobei alle Rollen (8, 9) als Schwenkrollen ausgebildet sind, indem sich die beiden nicht schwenkbare Rollen durch den Dearretiermechanismus schwenkbar machen lassen,
und zwar indem sie mittels des lösbaren Arretiermechanismus arretierbar sind, und
zwar in derjenigen Winkelposition, die eine bestimmte Geradeausfahrtrichtung des Fahrgestells (2) definiert, wobei
beide arretierbaren Rollen (9) zusammen mittels eines Hebels (20) lösbar sind und
die Handgriffe (6) den Hebel (20) bilden und in bestimmungsgemäßer Position des Fahrgestells (2) im Wesentlichen horizontal sind und gegen die Geradeausfahrtrichtung nach hinten ragen und zum Lösen nach oben schwenkbar sind.

2. Rollator (2) nach Anspruch 1, **dadurch gekennzeichnet, dass** der Arretiermechanismus (16) jede der arretierbaren Rollen (8) mittels einer Vorspannungseinrichtung selbsttätig arretiert, sobald die Rolle in die Winkelposition geschwenkt ist.

3. Rollator (2) nach einem der Ansprüche 1 oder 2, **dadurch gekennzeichnet, dass** der Arretiermechanismus (16) jede der arretierbaren Rollen (8) mittels eines Zugriegels (18) arretiert, der mittels Bowdenzug (24) lösbar ist.

## Claims

1. A walker (2)
- for supporting a walking or standing person by two handles (6),
- comprising a frame (4) with an unlocking mechanism (18) and a locking mechanism (16),
- wherein the two handles (6) are attached at the frame on the lefthand and righthand sides thereof as viewed in a straight-ahead direction of travel in a proper position of the walker (2),
- comprising four wheels (8, 9), respectively attached to the frame in such a way that they all roll on a flat floor (10) in a proper orientation of the walker (2), and two of which are designed as pivoting wheels, and two wheels (9), namely the two rear wheels, which are not pivotable, define the straight-ahead direction of travel of the walker (2),
wherein all the wheels (8, 9) are designed as pivotable wheels by enabling the two non-pivotable wheels to become pivotable by executing the unlocking mechanism,
namely by being lockable by means of the detachable locking mechanism,
which is in the angular position that defines a particular straight-ahead direction of travel of the walker (2), wherein
both lockable wheels (9) are detachable together by using a lever (20), and said handles (6) form said lever (20), and are essentially horizontal in the proper position of the walker (2), and project backwards against the straight-ahead direction of travel, and can be pivoted upwards for detaching.

2. The walker (2) according to claim 1, **characterized in that** said locking mechanism (16) locks each of the lockable wheels (8) automatically by means of a preload device, as soon as the wheel has pivoted into the angular position.

3. The walker (2) according to either of claims 1 or 2, **characterized in that** said locking mechanism (16) locks each of the lockable wheels (8) by means of a drawbar (18), which can be detached by means of a Bowden cable (24).

## Revendications

1. Déambulateur (2)
- pour supporter une personne marchante ou debout par deux poignées (6),
- comprenant un châssis (4) avec un mécanisme de déverrouillage (18) et un mécanisme de verrouillage (16),
- dans lequel les deux poignées (6) sont attachées à gauche et à droite au châssis dans la position prévue du déambulateur (2), vu dans la direction de mouvement en ligne droite,
- comprenant quatre roulettes (8, 9), qui sont respectivement attachées au châssis de manière qu'elles roulent toutes sur sol plat (10) dans l'orientation ainsi prévue du déambulateur (2), et dont deux sont désignées comme roulette pivotante, et deux roulettes (9), c'est-à-dire les deux roulettes arrière non pivotables, définissent la direction de mouvement en ligne droite du déambulateur (2),
dans lequel toutes les roulettes (8, 9) sont désignées comme roulettes pivotantes, par le fait que les deux roulettes non pivotantes peuvent être rendues pivotantes par le mécanisme de déverrouillage,
à savoir par le fait qu'elles peuvent être verrouillées au moyen du mécanisme de verrouillage détachable, et
à savoir dans la position angulaire qui définit une direction de mouvement en ligne droite particulaire du déambulateur (2), dans lequel
les deux roulettes verrouillables (9) sont détachables ensemble au moyen d'un levier (20), et les poignées (6) forment le levier (20), et sont sensiblement horizontales dans la position prévue du déambulateur (2), et dépassent en arrière contre la direction de mouvement en ligne droite, et sont pivotables vers le haut pour détachement.

2. Déambulateur (2) selon la revendication 1, **caractérisé en ce que** le mécanisme de verrouillage (16) verrouille automatiquement chacune des roulettes verrouillables (8) au moyen d'un élément sous tension préalable, dès que la roulette est pivotée dans la position angulaire.

3. Déambulateur (2) selon l'une des revendications 1 ou 2, **caractérisé en ce que** le mécanisme de verrouillage (16) verrouille chacune des roulettes verrouillables (8) au moyen d'une tirette (18), qui peut être détachée au moyen d'un câble Bowden (24).
